# EUROPEAN PATENT SPECIFICATION

(11) **EP 2 626 217 B1**
(45) Date of publication and mention of the grant of the patent: **08.04.2015**
(21) Application number: 12193140.6
(22) Date of filing: 19.11.2012
(51) Int. Cl.: B60B 1/14, B60B 9/14, B60B 27/00, B60B 27/02, B60B 27/04

(54) **Wheel for Motorcycle**
Reifen für ein Motorrad
Roue pour motocyclette

(30) Priority: 09.02.2012 JP 2012025740
(43) Date of publication of application: 14.08.2013
(73) Proprietor: Honda Motor Co., Ltd., Tokyo 107-8556 (JP)
(72) Inventor: Mikura, Keita, Saitama, 351-0193 (JP)
(74) Representative: Beder, Jens

(56) References cited:
- GB-A- 581 716
- GB-A- 191 323 879
- JP-A- S60 197 402

## Description

The present invention relates to a wheel for a motorcycle which is formed by casting as an integral body which is formed of a hub portion which is supported on an axle, a rim portion which coaxially surrounds the hub portion with a tire mounted thereon, and a plurality of spoke portions which connect the hub portion and the rim portion.

A wheel for a motorcycle which is formed as an integral body by casting using a material such as an aluminum alloy has been well-known conventionally. A wheel for a motorcycle disclosed in patent document 1 aims at the reduction of weight compared to a solid wheel by forming a hub portion and spoke portions into a hollow shape.

[Patent Literature 1] JP-A-2005-329827

In forming the spoke portions into a hollow shape, it is necessary to form holes for supporting sand cores and for removing sand in the spoke portions. In the wheel for a motorcycle disclosed in JP-A-2005-329827, a distal end portion of the spoke portion is formed in a relatively narrow shape and hence, it is difficult to remove sand at the time of removing sand so that there is a tendency that man-hours of a sand removing operation is increased.

JP S60 197402 A discloses a wheel according to the preamble of claim 1.

The present invention has been made in view of the above-mentioned circumstances, and it is an object of the present invention to provide a wheel for a motorcycle which can reduce the weight of the wheel and also can reduce man-hours of a sand removing operation.

To achieve the above-mentioned object, in a wheel for a motorcycle which is formed by casting as an integral body formed of a hub portion which is supported on an axle, a rim portion which coaxially surrounds the hub portion with a tire mounted thereon, and a plurality of spoke portions which connect the hub portion and the rim portion, the present invention has the first technical feature that the spoke portion includes a spoke proximal portion which extends radially from the hub portion and a pair of spoke branch portions which is bifurcated from a distal end portion of the spoke proximal portion and is contiguously connected to the rim portion, and a continuous hollow portion is formed in the spoke proximal portion and the hub portion.

In addition to the constitution of the first technical feature, the present invention has the second technical feature that in the distal end portion of the spoke proximal portion, an opening portion which is positioned between the pair of spoke branch portions bifurcated from the distal end portion of the spoke proximal portion, is communicated with the hollow portion and opens toward an inner peripheral side of the rim portion is formed.

In addition to the constitution of the first or second technical feature, the present invention has the third technical feature that a recessed portion which indents inwardly is formed on both outer side surfaces of the spoke branch portion in the direction along an axis of the axle.

In addition to any one of the constitutions of the first to third technical features, the present invention has the fourth technical feature that an end wall inner surface of the distal end portion of the spoke proximal portion which faces the hollow portion is formed of a pair of inclined surfaces which is inclined so as to shorten a distance therebetween in the direction toward the opening portion, and allows the opening portion to be arranged at a center portion therebetween.

In addition to any one of the constitutions of the first to fourth technical features, the present invention has the fifth technical feature that on the hub portion, a housing recessed portion which houses a portion of a power transmission member which is connected to a power source in an interlocking manner and a damper rubber which is interposed between the power transmission member and the hub portion therein is formed in such a state where the housing recessed portion opens on a side opposite to the hollow portion, and a communication hole through which the housing recessed portion and the hollow portion are communicated with each other is formed in the hub portion such that the communication hole opens in the housing recessed portion at a position avoiding the damper rubber.

In addition to any one of the constitution of the fifth technical feature, the present invention has the sixth technical feature that a brake disk and a pulser ring which is arranged inside the brake disk in the radial direction are mounted on the hub portion on a side opposite to the housing recessed portion with respect to a vehicle-body center line extending in the longitudinal direction.

The second opening portion 50 in the embodiment corresponds to the opening portion of the present invention.

### [Advantage of the Invention]

According to the first technical feature of the present invention, the spoke portion includes the spoke proximal portion which extends radially from the hub portion and the pair of spoke branch portions which is bifurcated from the distal end portion of the spoke proximal portion and is contiguously formed with the rim portion, and the continuous hollow portion is formed in the spoke proximal portion and the hub portion and hence, the wheel for a motorcycle can be made light-weighted. Further, the hollow portion does not extend to a distal end of the spoke portion and hence, there is no possibility that sand stays in the distal end portion of the spoke portion at the time of removing sand whereby man-hours of a sand removing operation can be suppressed.

According to the second technical feature of the present invention, the opening portion which is positioned between the pair of bifurcated spoke branch portions and is communicated with the hollow portion is formed in the distal end portion of the spoke proximal portion such that the opening portion opens toward the inner peripheral side of the rim portion whereby it is possible to avoid the deterioration of design property by making the opening portion hardly observed from the outside, and it is also possible to realize the further enhancement of sand removing property from the inside of the distal end portion of the spoke proximal portion.

According to the third technical feature of the present invention, by forming the recessed portion on both outer side surfaces of the spoke branch portion respectively in the direction along the axis of the axle, although the spoke branch portion is solid, the spoke branch portion has an approximately H transverse cross-sectional shape so that the occurrence of difference in cooling speed between the spoke branch portion and the spoke proximal portion can be prevented whereby it is possible to suppress the formation of cavities and it is possible to ensure rigidity while realizing the reduction of weight.

According to the fourth technical feature of the present invention, the end wall inner surface of the distal end portion of the spoke proximal portion which faces the hollow portion is formed of the pair of inclined surfaces which allows the opening portion to be arranged at the center portion therebetween and hence, the sand removing property of removing sand from the distal end portion of the spoke proximal portion can be further enhanced.

According to the fifth technical feature of the present invention, the communication hole which makes the housing recessed portion formed on the hub portion so as to house the portion of the power transmission member which is connected to the power source in an interlocking manner and the damper rubber therein and the hollow portion communicate with each other is formed in the hub portion such that the communication hole opens in the housing recessed portion at the position avoiding the damper rubber and hence, it is possible to prevent the wear of the damper rubber by being abraded by an opening end of the communication hole.

Further, according to the sixth technical feature of the present invention, the brake disk and the pulser ring are mounted on the hub portion on a side opposite to the housing recessed portion with respect to the vehicle-body center line and hence, it is unnecessary to form mounting bosses or the like for mounting the brake disk and the pulser ring on a housing recessed portion side where the damper rubber is housed thus preventing the housing recessed portion from becoming complicated.

- Fig. 1: A side view of a motorcycle.
- Fig. 2: A cross-sectional view taken along a line 2-2 in Fig. 1.
- Fig. 3: A side view with a part broken away of a wheel and a tire as viewed in the direction indicated by an arrow 3-3 in Fig. 2.
- Fig. 4: An enlarged view of an essential part shown in Fig. 2.
- Fig. 5: A cross-sectional view taken along a line 5-5 in Fig. 3.
- Fig. 6: A cross-sectional view taken along a line 6-6 in Fig. 4.
- Fig. 7: A view as viewed in the direction indicated by an arrow 7-7 in Fig. 4 in a state where a power transmission member is removed.

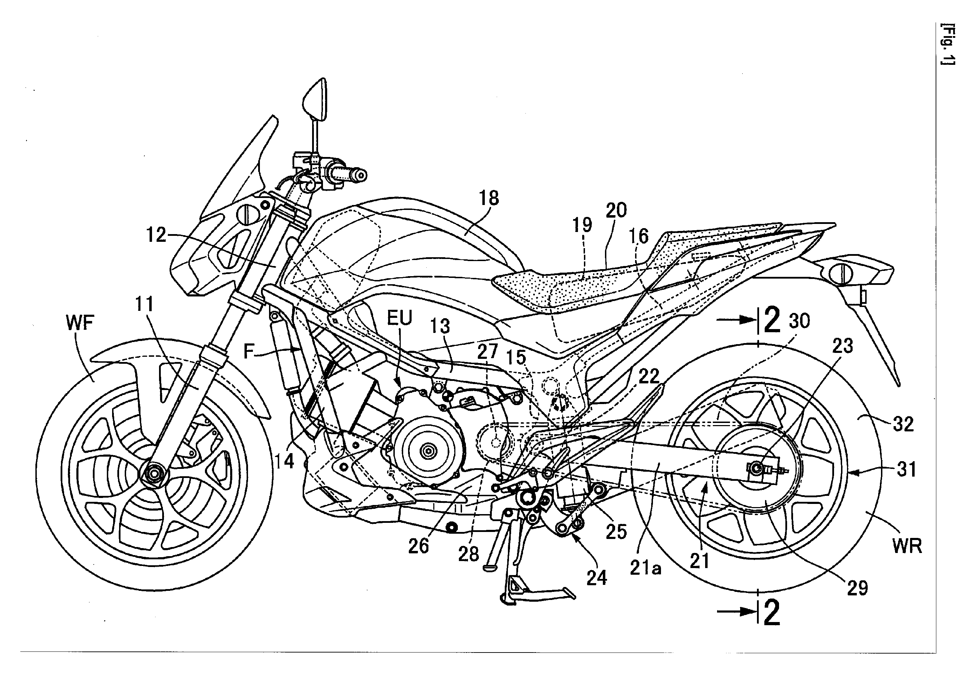

Hereinafter, an embodiment of the present invention is explained in conjunction with Fig. 1 to Fig. 7 herewith. Here, in the explanation made hereinafter, the directions of "front and rear", "left and right", and "up and down" are set in accordance with directions as viewed from a rider who rides on a motorcycle.

Firstly, as shown in Fig. 1, a vehicle body frame F of the motorcycle includes: a head pipe 12 which steerably supports a front fork 11 pivotally supporting a front wheel WF; a pair of left and right main frames 13 ... which extends rearwardly from the head pipe 12 in a rearwardly and downwardly inclined manner; a pair of left and right down frames 14 ... which is inclined rearwardly and downwardly at an angle steeper than an inclining angle of the main frames 13 ...and is connected to front end portions of the main frames 13 ...; a pair of left and right pivot plates 15 ... which extends downwardly from rear ends of both main frames 13 ...; and a pair of left and right seat frames 16 ... which extends rearwardly and upwardly from both pivot plates 15 ....

An engine unit EU which constitutes a drive source is arranged below the main frames 13 ... such that the engine unit EU is supported on the main frames 13 ..., the down frames 14 ... and the pivot plates 15 .... A storing box 18 which is arranged above the engine unit EU is supported on both main frames 13 .... A fuel tank 19 is arranged behind the storing box 18 and at an oblique rearward and upward position as viewed from the engine unit EU. A riding seat 20 which is supported on the seat frames 16 ... is arranged in such that the riding seat 20 covers the fuel tank 19 from above.

A front end of a swing arm 21 having a pair of left and right arm portions 21a, 21a which pivotally supports an axle 23 of a rear wheel WR between rear end portions thereof is supported on the pivot plates 15 ... in a vertically swingable manner by way of a support shaft 22. A rear cushion unit 25 is arranged between a link mechanism 24 which is arranged between the swing arm 21 and the pivot plates 15 ... and the pivot plates 15 ....

A transmission (not shown in the drawing) is housed in a crankcase 26 which the engine unit EU includes, and an endless chain 30 is extended between and wound around a drive sprocket 28 which is fixed to an output shaft 27 of the transmission on a left side of the crankcase 26 and a driven sprocket 29 which is arranged on a left side of the rear wheel WR in a state where the driven sprocket 29 is connected to the rear wheel WR in an interlocking manner.

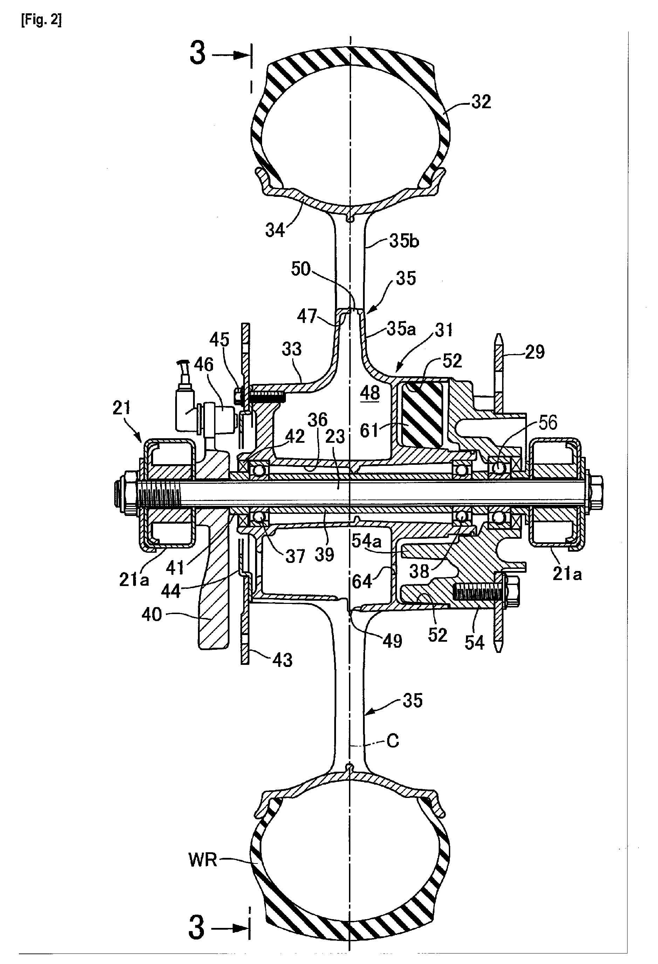

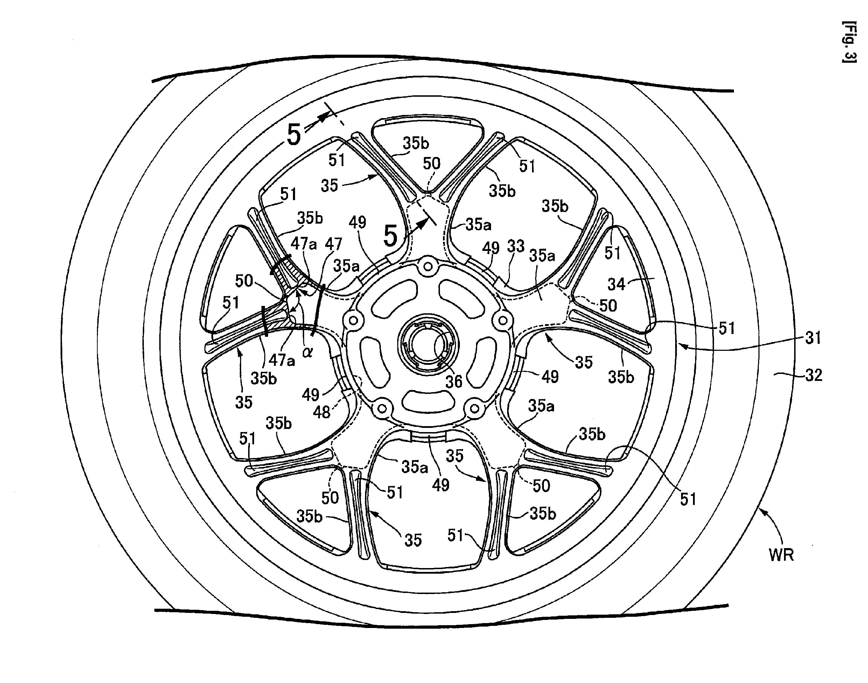

To explain the embodiment also in conjunction with Fig. 2 and Fig. 3, the rear wheel WR is constructed such that a tire 32 is mounted on a wheel 31 constituted in accordance with the present invention. The wheel 31 is formed by casting using an aluminum alloy or the like as an integral body formed of a hub portion 33 supported on the axle 23, a rim portion 34 which coaxially surrounds the hub portion 33 with the tire 32 mounted thereon, and a plurality of, for example, 5 spoke portions 35, 35 ... which connect the hub portion 33 and the rim portion 34 with each other.

The spoke portion 35 is formed of a spoke proximal portion 35a which radially extends from the hub portion 33 and a pair of spoke branch portions 35b, 35b which is bifurcated from a distal end portion of the spoke proximal portion 35a and is contiguously formed with the rim portion 33. The spoke portions 35 each have an approximately Y shape, and are arranged between the hub portion 33 and the rim portion 34 equidistantly in the circumferential direction.

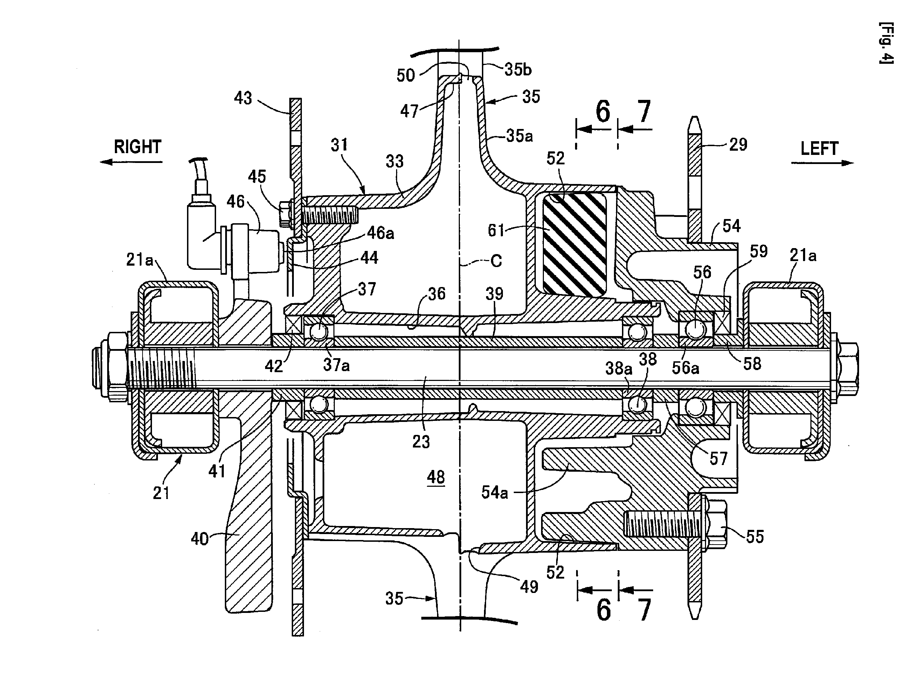

To explain the embodiment also in conjunction with Fig. 4, a through hole 36 through which the axle 23 passes is formed in the hub portion 33. A ball bearing 37 is arranged between the inner periphery of a right end portion of the through hole 36 and the axle 23, and a ball bearing 38 is arranged between the inner periphery of a left end portion of the through hole 36 and the axle 23. A cylindrical sleeve 39 which surrounds the axle 23 is arranged between inner rings 37a, 38a of these ball bearings 37, 38.

A bracket 40 is fixed to the arm portion 21a of the swing arm 21 which is arranged on a right side of the rear wheel WR. A cylindrical first spacer 41 which surrounds the axle 23 is interposed between the bracket 40 and the inner ring 37a of the ball bearings 37. An annular first sealing member 42 is interposed between the outer periphery of the first spacer 41 and the inner periphery of the right end portion of the through hole 36.

To a right end portion of the hub portion 33 in the direction along an axis of the axle 23, a brake disk 43, a pulsar ring 44 which is arranged inside the brake disk 43 in the radial direction are fastened together using a plurality of bolts 45 .... A brake caliper (not shown in the drawing) which strides over the outer periphery of the brake disk 43 is supported on the bracket 40, and a rotational speed sensor 46 having a detection portion 46a which is arranged close to and in an opposed manner with an outer peripheral portion of the pulsar ring 44 is mounted on the bracket 40.

A continuous hollow portion 48 is formed in the spoke proximal portions 35a ... of the plurality of spoke portions 35 ... and the hub portion 33 of the wheel 31. While sand constitutes a core for forming the hollow portion 48 at the time of forming the wheel 31 by casting, first opening portions 49 ... for removing sand after the completion of the forming of the wheel 31 by casting are formed on the outer periphery of the hub portion 33 such that each first opening portion 49 is arranged between the respective neighboring spoke portions 35 ....

A second opening portion 50 ... which is positioned between the pair of spoke branch portions 35b, 35b bifurcated from the distal end portion of the spoke proximal portion 35a ... and is communicated with the hollow portion 48 is formed on the distal end portion of the spoke proximal portion 35a ... such that each second opening portion 50 opens toward an inner peripheral side of the rim portion 34.

Further, an end wall inner surface 47 of the distal end portion of the spoke proximal portion 35a which faces the hollow portion 48 is formed of a pair of inclined surfaces 47a, 47a which is inclined so as to shorten a distance therebetween in the direction toward the second opening portion 50, and the second opening portion 50 is arranged at a center portion between the inclined surfaces 47a, 47a. An angle α which is made by both inclined surfaces 47a, 47a is set to an obtuse angle.

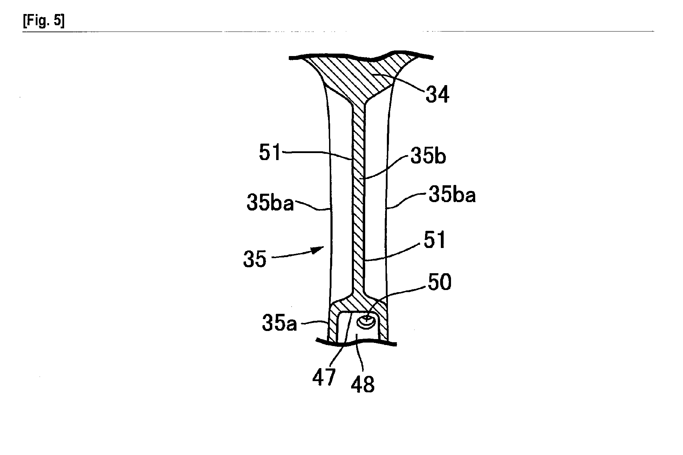

As shown in Fig. 5, a recessed portion 51, 51 which indents inwardly is formed on both outer side surfaces 35ba, 35ba of the spoke branch portion 35b in the direction along the axis of the axle 23 so that a transverse cross-sectional shape of the spoke branch portion 35b becomes an approximately H shape.

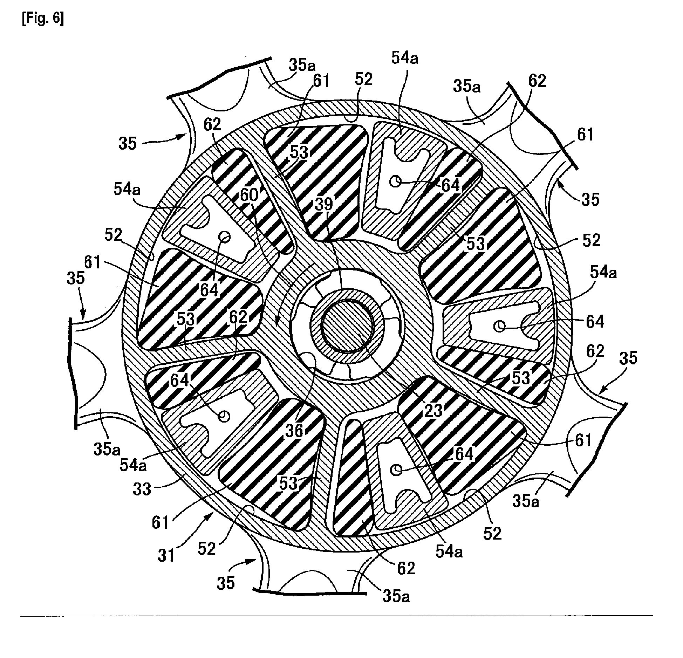

To explain the embodiment also in conjunction with Fig. 6, on the hub portion 33, a plurality of, for example, 5 housing recessed portions 52, 52 ... which open on a side opposite to the hollow portion 48, or on a side opposite to the brake disk 43 and the pulsar ring 44 in this embodiment with respect to a vehicle-body center line C extending in the longitudinal direction of the vehicle, that is, on a left side along the axis of the axle 23 are formed equidistantly in the circumferential direction such that each of partition walls 53, 53 ... which is integrally formed with the hub portion 33 and extend in the radial direction is interposed between the housing recessed portions 52, 52 arranged adjacent to each other.

The driven sprocket 29 for transmitting power from the engine unit EU to a wheel 31 side is fastened to the outer periphery of a ring-shaped power transmission member 54 using a plurality of bolts 55 ... in a state where the driven sprocket 29 covers the plurality of housing recessed portions 52, 52 ... in common. A ball bearing 56 is interposed between the inner periphery of the power transmission member 54 and the outer periphery of the axle 23. A cylindrical second spacer 57 which surrounds the axle 23 is interposed between the inner ring 38a of the ball bearing 38 and an inner ring 56a of the ball bearing 56. An annular third spacer 58 which surrounds the axle 23 is interposed between the left arm portion 21a of the swing arm 21 and the inner ring 56a of the ball bearings 56. An annular second sealing member 59 which is positioned outside the ball bearing 56 in the axial direction is interposed between the inner periphery of the power transmission member 54 and the outer periphery of the third spacer 58.

Power transmission projections 54a ..., 54a ... which are housed in the housing recessed portions 52, 52 ... respectively are integrally formed on the power transmission member 54 in a projecting manner. In addition to the power transmission projection 54a ..., 54a ..., a drive-side damper rubber 61, 61 ... and a back-torque-side damper rubber 62, 62 ... are housed in the housing recessed portion 52, 52 .... The drive-side damper rubber 61, 61 ... is interposed between the partition wall 53, 53 ... arranged in front of the power transmission projection 54a, 54a ... in the rotational direction 60 indicated by an arrow in Fig. 6 when the rear wheel WR rotates in the forward direction and the power transmission projection 54a, 54a ..., and the back-torque-side damper rubber 62, 62 ... is interposed between the partition wall 53, 53 ... arranged behind the power transmission projection 54a, 54a ... in the above-mentioned rotational direction 60 and the power transmission projection 54a, 54a ....

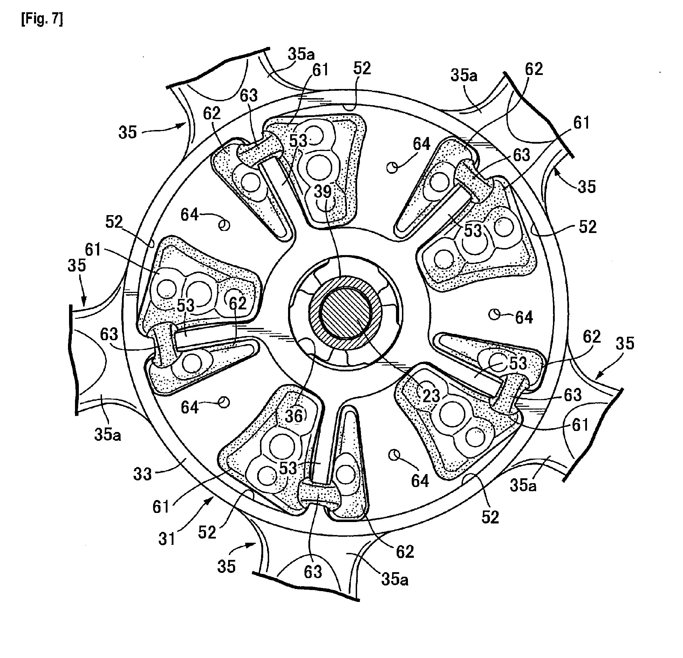

To explain this embodiment also in conjunction with Fig. 7, the drive-side damper rubber 61, 61 ... and the back torque-side damper rubber 62, 62 ... which are arranged at positions where the drive-side damper rubber 61, 61 ... and the back torque-side damper rubber 62, 62 ... sandwich the partition wall 53, 53 ... therebetween are integrally connected with each other by a connecting portion 63, 63 ... which strides over the partition wall 53, 53 ... on an open end side of the housing recessed portion 52, 52 ....

A plurality of communication holes 64, 64 ... which are formed by a plurality of pins used for supporting a sand core for forming the hollow portion 48 at the time of forming the wheel 31 by casting are formed in the hub portion 33 in such a manner that the hollow portion 48 and the housing recessed portions 52, 52 ... are communicated with each other through these communication holes 64, 64 .... These communication holes 64, 64 ... are formed in the hub portion 33 in such a manner that these communication holes 64, 64 ... open in the housing recessed portions 52, 52 ... at positions avoiding the drive-side damper rubbers 61, 61 ... and the back torque-side damper rubbers 62, 62 ..., that is, at positions corresponding to the power transmission projections 54a ..., 54a .... Further, these communication holes 64, 64 ... are also used for removing the sand from the hollow portion 48.

Next, to explain the manner of operation of this embodiment, the wheel 31 for the rear wheel WR is formed by casting as an integral body formed of the hub portion 33 which is supported on the axle 23, the rim portion 34 which coaxially surrounds the hub portion 33 with the tire 32 mounted thereon, and the plurality of spoke portions 35 which connect the hub portion 33 and the rim portion 34. The spoke portion 35 includes the spoke proximal portion 35a which extends radially from the hub portion 33 and the pair of spoke branch portions 35b, 35b ... which is bifurcated from the distal end portion of the spoke proximal portion 35a and is contiguously formed with the rim portion 34, and the continuous hollow portion 48 is formed in the spoke proximal portions 35a ... of the spoke portions 35 ... and the hub portion 33. Accordingly, the wheel 31 can be made light-weighted. Further, the hollow portion does not extend to the distal end of the spoke portion 35 ... and hence, there is no possibility that sand stays in the distal end portion of the spoke portion 35 ... at the time of removing sand whereby man-hours of a sand removing operation can be suppressed.

Here, the spoke proximal portion 35a is formed into a hollow shape so that the outer diameter of the spoke proximal portion 35a becomes large compared to the outer diameter of a solid spoke proximal portion. Accordingly, in a case where the spoke portion 35 is extended to the rim portion 34 while keeping such an outer diameter, cavities are liable to occur and also the weight of the wheel is increased. In view of the above, it may be possible to narrow the outer diameter of the spoke portion 35 from an intermediate portion of the spoke portion 35. In this case, however, not only the shape of the spoke portion 35 becomes unnatural in design but also a stress is liable to concentrate on a portion where the diameter becomes small. Accordingly, by forming the spoke portion 35 into a Y shape so that the spoke portion 35 is constituted of the spoke proximal portion 35a and the pair of spoke branch portions 35b, 35b which is bifurcated from the distal end portion of the spoke proximal portion 35a, it is possible to disperse a stress. Further, there is no possibility that the spoke portion 35 gives an unnatural impression in design even when the diameter of the spoke branch portions 35b, 35b is narrow.

Further, on the distal end portion of the spoke proximal portion 35a, the second opening portion 50 which is positioned between the pair of spoke branch portions 35b, 35b bifurcated from the distal end portion of the spoke proximal portion 35a, is communicated with the hollow portion 48 and opens toward the inner peripheral side of the rim portion 34 is formed. Accordingly, it is also possible to realize the further enhancement of sand removing property while avoiding the deterioration of design property by making the second opening portion 50 hardly observed from the outside.

That is, when the hollow portion extends to the distal end of the spoke portion 35, an opening portion for removing sand is formed such that the opening portion opens on the outer periphery of the rim portion 34 and hence, the lowering of the design property is brought about. On the other hand, as described above, by forming the second opening portion 50 which is positioned between the pair of spoke branch portions 35b, 35b on the distal end portion of the spoke proximal portion 35a such that the second opening portion 50 opens toward the inner peripheral side of the rim portion 34, it is possible to avoid the deterioration of design property.

Further, the end wall inner surface 47 of the distal end portion of the spoke proximal portion 35a which faces the hollow portion 48 is formed of the pair of inclined surfaces 47a, 47a which is inclined so as to shorten the distance therebetween in the direction toward the second opening portion 50, and allows the second opening portion 50 to be arranged at the center portion therebetween. Accordingly, the sand removing property of removing sand from the inside of the distal end portion of the spoke proximal portion 35a can be further enhanced. Particularly, in this embodiment, an angle α which is made by both inclined surfaces 47a, 47a is set to an obtuse angle and hence, it is possible to make the distal end portion of the spoke proximal portion 35a hardly clogged with sand thus further enhancing the sand removing property.

Further, the recessed portions 51, 51 which indent inwardly are formed on both outer side surfaces 35ba, 35ba of the spoke branch portion 35b respectively in the direction along the axis of the axle 23. Accordingly, although the spoke branch portion 35b is solid, the spoke branch portion 35b has an approximately H transverse cross-sectional shape so that the occurrence of difference in cooling speed between the spoke branch portion 35b and the spoke proximal portion 35a can be prevented whereby it is possible to suppress the formation of cavities and to ensure rigidity while realizing the reduction of weight.

Further, the housing recessed portions 52, 52 ... each of which houses the power transmission projection 54a ... which is the portion of the power transmission member 54 connected to the engine unit EU in an interlocking manner, and the drive-side damper rubber 61, 61 ... and the back torque-side damper rubber 62, 62 ... which are interposed between the power transmission member 54 and the hub portion 33 are formed on the hub portion 33 in such a state where the housing recessed portions 52, 52 ... open on the side opposite to the hollow portion 48, and the communication holes 64, 64... through which the housing recessed portions 52, 52 ... and the hollow portion 48 are communicated with each other are formed in the hub portion 33 so as to open in the housing recessed portions 52, 52 ... at the positions avoiding the drive-side damper rubbers 61, 61 and the back torque-side damper rubbers 62, 62. Accordingly, it is possible to prevent the wear of the drive-side damper rubbers 61, 61 and the back torque-side damper rubbers 62, 62 by being abraded by the opening ends of the communication holes 64, 64 ....

Further, the brake disk 43 and the pulser ring 44 which is arranged inside the brake disk 43 in the radial direction are mounted on the hub portion 33 on a side opposite to the housing recessed portions 52, 52 ... with respect to the vehicle-body center line C extending in the longitudinal direction of the vehicle. Accordingly, it is unnecessary to form mounting bosses or the like for mounting the brake disk 43 and the pulser ring 44 on a side of the housing recessed portions 52, 52 ...which house the drive-side damper rubbers 61, 61 ... and the back torque-side damper rubbers 62, 62 ... respectively thus avoiding the housing recessed portions 52, 52 ... from becoming complicated.

Although the embodiment of the present invention has been explained heretofore, the present invention is not limited to the above-mentioned embodiment and various modifications in design are conceivable without departing from the present invention described in claims.

23: axle
31: wheel
32: tire
33: hub portion
34: rim portion
35: spoke portion
35a: spoke proximal portion
35b: spoke branch portion
35ba: outer side surface of spoke branch portion
43: brake disk
44: pulsar ring
47: end wall inner surface
47a: inclined surface
48: hollow portion
50: second opening portion constituting opening portion
51: recessed portion
52: housing recessed portion
54: power transmission member
61: drive-side damper rubber
62: back torque-side damper rubber
64: communication hole
C: vehicle-body center line
EU: engine unit constituting power source

## Claims

1. A wheel for a motorcycle which is formed by casting as an integral body formed of a hub portion (33) which is supported on an axle (23), a rim portion (34) which coaxially surrounds the hub portion (33) with a tire (32) mounted thereon, and a plurality of spoke portions (35) which connect the hub portion (33) and the rim portion (34), wherein the spoke portion (35) includes a spoke proximal portion (35a) which extends radially from the hub portion (33) and a pair of spoke branch portions (35b) which is bifurcated from a distal end portion of the spoke proximal portion (35a) and is contiguously connected to the rim portion (34), and **characterized in that**
a continuous hollow portion (48) is formed in the spoke proximal portion (35a) and the hub portion (33).

2. The wheel for a motorcycle according to claim 1, wherein in the distal end portion of the spoke proximal portion (35a), an opening portion (50) which is positioned between the pair of spoke branch portions (35b) bifurcated from the distal end portion of the spoke proximal portion (35a), is communicated with the hollow portion (48) and opens toward an inner peripheral side of the rim portion (34) is formed.

3. The wheel for a motorcycle according to claim 1 or 2, wherein a recessed portion (51) which indents inwardly is formed on both outer side surfaces (35ba) of the spoke branch portion (35b) in the direction along an axis of the axle (23).

4. The wheel for a motorcycle according to any one of claims 1 to 3, wherein an end wall inner surface (47) of the distal end portion of the spoke proximal portion (35a) which faces the hollow portion (48) is formed of a pair of inclined surfaces (47a) which is inclined so as to shorten a distance therebetween in the direction toward the opening portion (50), and allows the opening portion (50) to be arranged at a center portion therebetween.

5. The wheel for a motorcycle according to any one of claims 1 to 4, wherein on the hub portion (33), a housing recessed portion (52) which houses a portion of a power transmission member (54) which is connected to a power source (EU) in an interlocking manner and a damper rubber (61, 62) which is interposed between the power transmission member (54) and the hub portion (33) therein is formed in such a state where the housing recessed portion (52) opens on a side opposite to the hollow portion (48), and a communication hole (64) through which the housing recessed portion (52) and the hollow portion (48) are communicated with each other is formed in the hub portion (33) such that the communication hole (64) opens in the housing recessed portion (52) at a position avoiding the damper rubber (61, 62) .

6. The wheel for a motorcycle according to claim 5, wherein a brake disk (43) and a pulser ring (44) which is arranged inside the brake disk (43) in the radial direction are mounted on the hub portion (33) on a side opposite to the housing recessed portion (52) with respect to a vehicle-body center line (C) extending in the longitudinal direction.

## Patentansprüche

1. Rad für ein Motorrad, das durch Gießen eines einstückigen Körpers gebildet wird, der aus einem Nabenabschnitt (33), der von einer Achse (23) getragen wird, einen Felgenabschnitt (34), der den Nabenabschnitt (33) koaxial umgibt, mit einem Reifen (32), der darauf montiert ist, und einer Mehrzahl von Speichenabschnitten (35), die den Nabenabschnitt (33) und den Felgenabschnitt (34) miteinander verbinden, wobei der Speichenabschnitt (35) einen nahen Speichenabschnitt (35a) enthält, der sich radial von dem Nabenabschnitt (33) erstreckt und einem Paar von Speichen- Zweigabschnitten (35b), die von einem entfernten Endabschnitt des nahen Speichenabschnitts (35) gegabelt sind und angrenzend mit dem Felgenabschnitt (34) verbunden sind, und **dadurch gekennzeichnet, dass**
ein kontinuierlicher, hohler Abschnitt (48) an dem nahen Speichenabschnitt (35) und dem Nabenabschnitt (33) ausgebildet ist.

2. Rad für ein Motorrad gemäß Anspruch 1,
wobei in dem entfernten Endabschnitt des nahen Speichenabschnitts (35) ein Öffnungsabschnitt (50), der zwischen dem Paar von Speichen- Zweigabschnitten (35), die von dem entfernten Endabschnitt des nahen Speichenabschnitts (35) gegabelt sind, mit dem hohlen Abschnitt (48) in Verbindung steht und sich auf eine innere Umfangsseite des Felgenabschnitts (34) öffnet, gebildet ist.

3. Rad für ein Motorrad gemäß Anspruch 1 oder 2,
wobei ein ausgenommener Abschnitt (51), der nach innen einrückt, an beiden äußeren Seitenoberflächen (35ba) des Speichen- Zweigabschnitts (35b) in der Richtung entlang einer Achse der Achse (33) gebildet ist.

4. Rad für ein Motorrad gemäß einem der Ansprüche 1 bis 3, wobei eine Endwand-Innenoberfläche (47) des entfernten Endabschnitts des nahen Speichenabschnittes (35a), der auf den hohlen Abschnitt (48) zugewandt ist, aus einem Paar von geneigten Oberflächen (47a) gebildet wird, die so geneigt sind, dass sie einen Abstand dazwischen verringern in der Richtung auf den Öffnungsabschnitt (50) zu und dem Öffnungsabschnitt (50) ermöglichen, an einer zentralen Position dazwischen angeordnet zu sein.

5. Rad für ein Motorrad gemäß einem der Ansprüche 1 bis 4, wobei auf dem Nabenabschnitt (33) ein ausgenommener Gehäuseabschnitt (52), der einen Abschnitt eines Kraftübertragungselements (54) aufnimmt, der mit einer Energiequelle (EU) in einer gekoppelten Weise verbunden ist und einen Dämpfergummi (61, 62) aufnimmt, der zwischen dem Kraftübertragungselement (54) und dem Nabenabschnitt (33) darin eingeschlossen ist, in einem Zustand, in dem der ausgenommene Gehäuseabschnitt (52) auf einer Seite, die von dem hohlen Abschnitt (48) abgewandt ist, gebildet ist und ein Verbindungsloch (64) durch das der ausgenommene Gehäuseabschnitt (42) und der hohle Abschnitt (48) in Verbindung miteinander stehen, in dem Nabenbereich (33) ausgebildet ist, so dass das Verbindungsloch (64) in dem ausgenommenen Gehäuseabschnitt (52) sich an einer Position öffnet, den Dämpfergummi (61, 62) zu vermeiden.

6. Rad für ein Motorrad gemäß Anspruch 5,
wobei eine Bremsscheibe (43) und ein Impulsgeberring (44), der innerhalb der Bremsscheibe (43) in der radialen Richtung angeordnet ist, an dem Nabenabschnitt (33) an einer Seite gegenüber dem ausgenommenen Gehäuseabschnitt (52) in Bezug auf eine Fahrzeugkörpermittenlinie (C), die sich in der Längsrichtung erstreckt, montiert ist.

## Revendications

1. Roue pour motocyclette qui est formée par moulage comme un corps d'une seule pièce formé d'une portion formant moyeu (33) qui est supportée sur un axe (23), une portion formant jante (34) qui entoure de façon coaxiale la portion formant moyeu (33) avec un pneu (32) monté dessus, et une pluralité de portions formant rayons (35) qui raccordent la portion formant moyeu (33) et la portion formant jante (34), dans laquelle la portion formant rayon (35) comprend une portion proximale du rayon (35a) qui s'étend radialement depuis la partie formant moyeu (33) et une paire de portions de subdivision de rayon (35b) qui est divisée à partir d'une portion d'extrémité distale de la portion proximale du rayon (35a) et est raccordées en continu à la portion formant jante (34), et **caractérisée en ce qu'**une portion creuse continue (48) est formée dans la portion proximale du rayon (35a) et la portion formant moyeu (33).

2. Roue pour motocyclette selon la revendication 1, dans laquelle dans la portion d'extrémité distale de la portion proximale de rayon (35a), est formée une portion d'ouverture (50) qui est positionnée entre la paie de portions de subdivision de rayon (35b) subdivisées à partir de la portion d'extrémité distale de la portion proximale du rayon (35a), est en communication avec la portion creuse (48) et s'ouvre vers un côté périphérique interne de la portion formant jante (34).

3. Roue pour motocyclette selon la revendication 1 ou 2, dans laquelle une portion évidée (51) qui rentre vers l'intérieur est formée sur les deux surfaces latérales extérieures (35ba) de la portion de subdivision de rayon (35b) dans le sens le long d'un axe de l'essieu (23).

4. Roue pour motocyclette selon l'une quelconque des revendications 1 à 3, dans laquelle une surface interne de paroi d'extrémité (47) de la portion d'extrémité distale de la portion proximale de rayon (35a) qui fait face à la portion creuse (48) est formée sur deux surfaces inclinées (47a) qui sont inclinées de manière à raccourcir une distance entre les deux dans le sens vers la portion d'ouverture (50), et permet à la portion d'ouverture (50) d'être disposée sur une portion centrale entre les deux.

5. Roue pour motocyclette selon l'une quelconque des revendications 1 à 4, dans laquelle sur la portion formant moyeu (33), une portion évidée de logement (52) qui loge une portion d'un élément de transmission de puissance (54), qui est raccordé à une source de puissance (EU) par verrouillage réciproque, et un amortisseur en caoutchouc (61, 62) qui est interposé entre l'élément de transmission de puissance (54) et la portion formant moyeu (33) à l'intérieur est formée dans un état où la portion évidée de logement (52) s'ouvre sur un côté opposé à la portion creuse (48), et un trou de communication (64), à travers lequel la portion évidée de logement (52) et la portion creuse (48) sont en communication l'une avec l'autre, est formé dans la portion formant moyeu (33) de telle sorte que le trou de communication (64) s'ouvre dans la portion évidée du logement (52) à une position évitant l'amortisseur en caoutchouc (61, 62).

6. Roue pour motocyclette selon la revendication 5, dans laquelle un disque de frein (43) et un anneau d'impulsion (44) qui est disposé à l'intérieur du disque de frein (43) dans le sens radial, sont montés sur la portion formant moyeu (33) sur un côté opposé à la portion évidée du logement (52) par rapport à une ligne centrale (C) du corps de véhicule s'étendant dans le sens longitudinal.
